(19) Europäisches Patentamt
European Patent Office
Office européen des brevets

(11) **EP 4 644 947 A1**

(12) **EUROPEAN PATENT APPLICATION**

(43) Date of publication:
**05.11.2025  Bulletin 2025/45**

(21) Application number: **24275044.6**

(22) Date of filing: **30.04.2024**

(51) International Patent Classification (IPC):
***G01S 7/40*** *(2006.01)*      ***G01S 13/933*** *(2020.01)*

(52) Cooperative Patent Classification (CPC):
**G01S 7/4082; G01S 13/933**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BAE SYSTEMS plc**
**London SW1Y 5AD (GB)**

(72) Inventor: **The designation of the inventor has not
yet been filed**

(74) Representative: **BAE SYSTEMS plc**
**Group IP Department**
**Victory Point**
**Frimley**
**Camberley, Surrey GU16 7EX (GB)**

(54) **IMPROVED VIRTUAL TARGET GENERATOR**

(57)    Disclosed is a Target Generator, TG, for use with a RADAR system to generate a virtual target in response to the TG receiving a signal from the RADAR system, wherein the TG comprises first and second antennas arranged to receive the signal from the RADAR, the first and second antennas arranged such that they are separated by a defined distance, d, in a propagation direction of the signal from the RADAR.

Fig. 1

## Description

FIELD

The present invention relates to improvements relating to Virtual target Generators, used with RADAR systems, especially for design proving, testing, calibration and product development.

BACKGROUND

A Virtual Target Generator (TG) operates to receive a signal from a RADAR transmitter, process it and retransmit it to the associated RADAR receiver, so that the RADAR receiver interprets the received signal as a real target located at a more remote location than the physical location of the TG.

Through the use of TGs, it is possible to test the capabilities of a RADAR system without the need for expensive aircraft flying in the operation range of the RADAR system or, at least, minimising the need for such aircraft.

There are issues with the processing of the signal received at the TG from the RADAR transmitter. It is an aim of embodiments of the present invention to address such issues and any other issues not specifically mentioned herein.

SUMMARY

According to a first aspect of the present invention, there is provided a Target Generator, TG, for use with a RADAR system to generate a virtual target in response to the TG receiving a signal from the RADAR system, wherein the TG comprises first and second antennas arranged to receive the signal from the RADAR, the first and second antennas arranged such that they are separated by a defined distance, d, in a propagation direction of the signal from the RADAR.

In an embodiment, each of the first and second antennas is associated with a substantially identical receiver.

In an embodiment, the TG further comprises a processor arranged to calculate a phase delay for a given sample, n, wherein the phase delay for the given sample, n, is given by:

$$\emptyset_n^R = R \cdot \Delta\emptyset_d = \left(R + \frac{nv}{\omega_s}\right) \cdot \Delta\emptyset_d$$

where:

R is the range to the target;
$\Delta\emptyset_d$ is the rate of change of phase with distance for each sample;
v is the target velocity; and
$\omega_s$ is the sample rate.

In an embodiment, d is less than half a wavelength across a frequency range of interest.

In an embodiment, d is between a quarter of a wavelength and a half of a wavelength across the frequency range of interest.

In an embodiment, the TG comprises at least 3 antennas.

According to a second aspect of the present invention, there is provided a method of generating a virtual target in a RADAR system, using a Target Generator, TG, whereby:

the RADAR system transmits a signal;

the TG receives the signal at first and second antennas, the first and second antennas arranged such that they are separated by a defined distance, d, in a propagation direction of the signal from the RADAR; and

the TG transmits a signal to the RADAR, the transmitted signal representing the virtual target.

In an embodiment, the TG calculates a phase delay for a given sample, n, wherein the phase delay for the given sample, n, is given by:

$$\emptyset_n^R = R \cdot \Delta\emptyset_d = \left(R + \frac{nv}{\omega_s}\right) \cdot \Delta\emptyset_d$$

where:

R is the range to the target;
$\Delta\emptyset_d$ is the rate of change of phase with distance for each sample;
v is the target velocity; and
$\omega_s$ is the sample rate.

BRIEF DESCRIPTION OF THE FIGURES

Embodiments of the invention will now be described by way of example only with reference to the figures, in which:

Figure 1 shows a representation of an antenna arrangement in a TG according to an embodiment of the invention;
Figure 2 represents the issue of phase ambiguity viz a viz sample point positions; and
Figure 3 shows a flowchart illustrating an embodiment of the invention.

DETAILED DESCRIPTION

When simulating a target return at the TG, it is important to reproduce the effect of a moving real target on the returned pulse. Such a simulation is important to create a more realistic target.

For a stationary target, the returned pulse is simply a reflection of the incident pulse. In other words, the processing involved for a static target is straightforward. In real life, targets tend to move and so additional steps are required to more accurately simulate such targets.

For a moving target, the distance to the target is a function of time, and changes across the length of the pulse, giving rise to a time dependent phase shift across the returned pulse. This is what produces the Doppler effect, as a cumulative phase change is a change in frequency.

For a target with a constant velocity, and a pulse that is being sampled at a constant rate, the phase shift applied to the nth sample is given by:

$$\Delta\emptyset_D = \frac{2nv}{c}\left(\frac{2\pi f_c}{\omega_s} + \Delta\emptyset_n\right)$$

Where:

$v$ is the target velocity
$c$ is the speed of light
$f_c$ is the carrier frequency of the pulse from the RADAR
$\omega_s$ is the sample rate
$\Delta\emptyset_n$ is the phase difference between the $n^{th}$ sample and the $(n-1)^{th}$ sample.

Calculating this quantity in a TG requires knowledge of $f_c$, which has to be estimated by measuring phases across incoming samples. As the in-phase and quadrature (I,Q) samples in the incident pulse are frequently subject to a significant amount of noise, this process is prone to error, and often requires a certain amount of smoothing across multiple samples to produce a reasonable estimation of frequency.

This is not an ideal situation, as real targets don't need any knowledge of the frequency content of the pulses that they reflect. As such, simulating moving targets introduces additional problems, requiring additional steps to address them.

The need to know the frequency content of an incoming pulse from the RADAR stems from the fact that the array of (I,Q) samples collected from the incident pulse represent a single snapshot of the structure of the electromagnetic wave that was traveling in free space before hitting the TG receiver. Information about how this wave is evolving with time (frequency) is lost, and has to be inferred from successive samples.

By using an embodiment of the invention, it is possible to collect enough information about the incident pulse to not require any a priori knowledge of the pulse frequency content via the use of a plurality of receivers at known physical spacing(s).

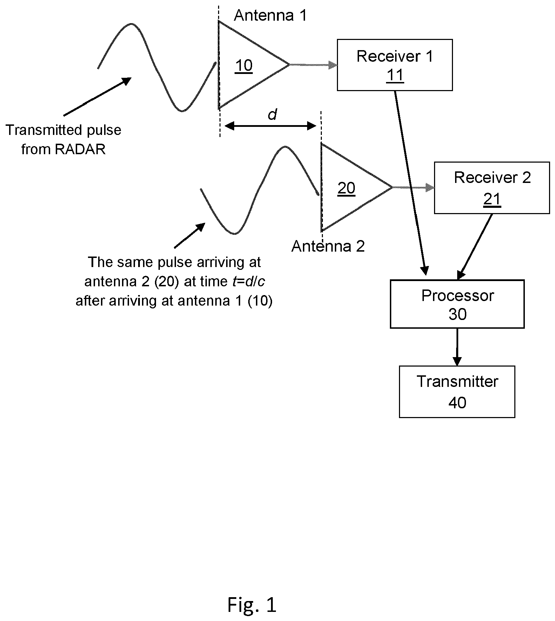

Figure 1 shows a representation of a TG, comprising two antennas (10, 20), each respectively connected to a receiver (11, 21). As can be seen a pulse transmitted from a RADAR (not shown) arrives at antenna 1 (10) shortly before the same pulse arrives at antenna 2 (20). Also shown in Figure 1 is a Processor (30), which is programmed to perform the calculations necessary to generate the virtual target. The results of the calculation are then transmitted by Transmitter (40), with the transmitted signal representing the virtual target for reception by the RADAR.

It is possible to derive the rate of change of phase with distance for each sample as:

$$\Delta\emptyset_d = \frac{\emptyset_n^2 - \emptyset_n^1}{d}$$

Where:

$d$ is the distance between the two receivers
$\emptyset_n^1$ is the phase of sample $n$ from receiver 1 (11)
$\emptyset_n^2$ is the phase of sample $n$ from receiver 2 (21)

The phase delay for each sample for a fixed target at range $R$ is just:

$$\emptyset_R = R \cdot \Delta\emptyset_d = R \cdot \frac{\emptyset_n^2 - \emptyset_n^1}{d}$$

For a moving, constant velocity target, the range to the target changes with time, so the phase delay for sample $n$ is given by:

$$\emptyset_n^R = R \cdot \Delta\emptyset_d = \left(R + \frac{nv}{\omega_s}\right) \cdot \Delta\emptyset_d$$

While this is still a quantity that depends on the difference between two measured phases and is thus subject to noise (and may thus still require smoothing), it does not require a calculation phase that requires a frequency or the speed of light, thus eliminating potential sources of error (and numerical noise) introduced by the necessity of handling large numbers.

The distance $d$ between the two receive antennas (10, 20) in the above case requires some consideration.

It is desirable that the phase difference between the two sampling points is, on average, as large as possible, in order to minimise the effect of sampling errors on the calculated phase difference. However, it is also necessary to avoid the possibility of phase ambiguities, where the distance between the two antennas is more than a wavelength.

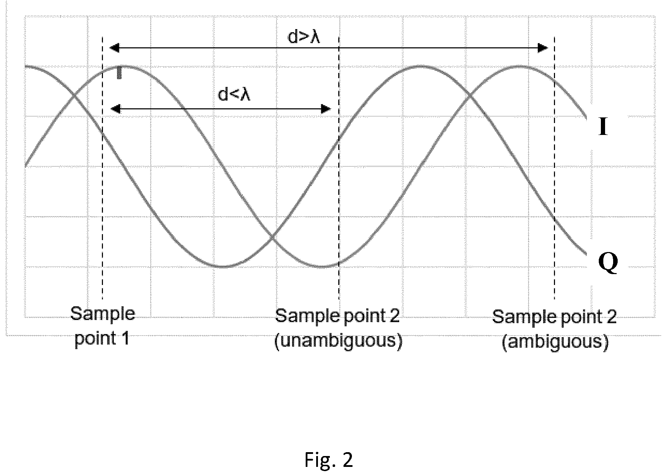

Figure 2 illustrates the problem of phase ambiguity, whereby if sample point 2 is less than 1 wavelength away from sample point 1, then there is no ambiguity. However, if sample point 2 is located more than a wavelength away, then it cannot be determined with certainty how many cycles have elapsed between the two sample points.

The conclusion to be drawn from Figure 2 is that the two sampling points i.e. the antennas (10,20), should be located no more than half a wavelength apart, at the longest expected wavelength.

Preferably, the sampling points should be spaced apart between a quarter wavelength and half a wavelength across all expected wavelengths. This requires some knowledge of the RADAR system used, but in most circumstances, this should not pose a problem.

Usually, the frequency band of the RADAR system is known, since the TG must be designed to operate with parameters dictated by the RADAR system. For instance for an S-band RADAR, the frequency of operation is about 3GHz, giving a wavelength of about 10cm. For an X-band RADAR, the frequency of operation is about 9-10GHz, giving a wavelength of about 3cm. These figures enable d to be calculated for any particular embodiment.

Note that operation over a wider range of wavelengths may be facilitated by using more than two antennas and associated sampling chains. These would require spacing in a manner to avoid phase ambiguity and so there may be different spacing between e.g. a first and second antenna, and then between the second a third antenna.

It is clear that embodiments of the invention are reliant on knowing the distance d between antennas / sampling points. As such, it is useful to assist in the understanding of embodiment to consider the possible effects of errors in this knowledge, and to consider means to rectify this.

Consider the fixed target range case:

$$\emptyset_R + \partial\emptyset_R = R \cdot \frac{\emptyset_n^2 - \emptyset_n^1}{d + \partial d}$$

Where:

$\partial d$ is the error in the probe separation distance d
$\partial\emptyset$ is the resultant error in the calculated phase offset

In this case, given a target generator that is generating a synthetic or virtual target range via a combination of time delay and range sample phase, the target range sample will be correct, but the apparent phase of the target will contain a range dependant error.

In the case of a constant velocity moving target:

$$\emptyset_n^R + \partial\emptyset_n^R = (R + \frac{nv}{\omega_s}) \cdot \frac{\emptyset_n^2 - \emptyset_n^1}{d + \partial d}$$

This will produce an error in the rate of change of phase across the target - which will equate to a Doppler frequency that does not match the speed of the target.

Both of these errors are amenable to measurement under laboratory conditions, allowing calibration of the sampling point separation distance (receive antenna separation), thereby allowing corrective steps to be taken in the ensuing calculations to mitigate such errors.

It is worth repeating that embodiments of the invention rely upon a physical separation of the two receive antennas (10, 20) in the direction of propagation and that this technique would not work with two antennas at the same distance (i.e. d=0) connected via different length cables to their receivers.

It is, therefore, preferred that the two receive chains (antennas, cables, ADC's etc) are constructed to be as physically identical as possible so as to reduce or remove any discrepancies between the receive chains, so that the only phase difference is due to the separation d, rather than any inherent constructional artefact.

The known distance $d$ between the receive antennas (10, 20) also allows the calculation of the number, $N_s$, of ADC samples between "first sample in pulse" arrival at each channel to be derived:

$$N_s = \frac{d\omega_s}{c}$$

By virtue of the aforementioned processes, an improved TG s provided which is able to provide a better and more realistic target without the need to know in advance the frequency of an incident pulse. The necessary information can be inferred and calculated as shown.

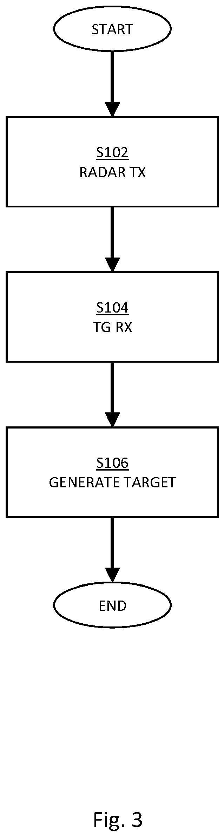

For completeness, Figure 3 shows a flowchart illustrating a method according to an embodiment of the invention. At S102, the RADAR transmits a signal. At S104, the TG receives the signal at each of 2 receive antennas. At S106, the TG generates a virtual target and transmits, the transmitted signal representing the virtual target.

Advantageously, the virtual target can be created without any prior knowledge of the frequency of operation (transmit) of the RADAR.

**Claims**

1. A Target Generator, TG, for use with a RADAR system to generate a virtual target in response to the TG receiving a signal from the RADAR system, wherein the TG comprises first and second antennas arranged to receive the signal from the RADAR, the first and second antennas arranged such that they are separated by a defined distance, d, in a propagation direction of the signal from the RADAR.

**2.** The TG of claim 1 wherein each of the first and second antennas is associated with a substantially identical receiver.

**3.** The TG of any preceding claim wherein the TG further comprises a processor arranged to calculate a phase delay for a given sample, n, wherein the phase delay for the given sample, n, is given by:

$$\emptyset_n^R = R \cdot \Delta\emptyset_d = \left(R + \frac{nv}{\omega_s}\right) \cdot \Delta\emptyset_d$$

where:

R is the range to the target;
$\Delta\emptyset_d$ is the rate of change of phase with distance for each sample;
v is the target velocity; and
$\omega_s$ is the sample rate.

**4.** The TG of claim 3 wherein d is less than half a wavelength across a frequency range of interest.

**5.** The TG of claim 4 wherein d is between a quarter of a wavelength and a half of a wavelength across the frequency range of interest.

**6.** The TG of any preceding claim comprising at least 3 antennas.

**7.** A method of generating a virtual target in a RADAR system, using a Target Generator, TG, whereby:

the RADAR system transmits a signal;
the TG receives the signal at first and second antennas, the first and second antennas arranged such that they are separated by a defined distance, d, in a propagation direction of the signal from the RADAR; and
the TG generates and transmits a signal to the RADAR, the transmitted signal representing the virtual target.

**8.** The method of claim 7 wherein the TG calculates a phase delay for a given sample, n, wherein the phase delay for the given sample, n, is given by:

$$\emptyset_n^R = R \cdot \Delta\emptyset_d = \left(R + \frac{nv}{\omega_s}\right) \cdot \Delta\emptyset_d$$

where:

R is the range to the target;
$\Delta\emptyset_d$ is the rate of change of phase with distance for each sample;
v is the target velocity; and

$\omega_s$ is the sample rate.

Antenna 1

Transmitted pulse
from RADAR

10

*d*

Receiver 1
11

20

Antenna 2

The same pulse arriving at
antenna 2 (20) at time *t=d/c*
after arriving at antenna 1 (10)

Receiver 2
21

Processor
30

Transmitter
40

Fig. 1

Fig. 2

START

S102
RADAR TX

S104
TG RX

S106
GENERATE TARGET

END

Fig. 3

Europäisches
Patentamt

European
Patent Office

Office européen
des brevets

# EUROPEAN SEARCH REPORT

**Application Number**

EP 24 27 5044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 916 420 A1 (ROHDE & SCHWARZ [DE]) 1 December 2021 (2021-12-01) | 1,2,6,7 | INV.<br>G01S7/40<br>G01S13/933 |
| A | * abstract; figures 1-4 *<br>* paragraphs [0001], [0029] - [0061] *<br>----- | 3-5,8 | |
| A | US 2021/018591 A1 (GRUBER ANDREAS [AT] ET AL) 21 January 2021 (2021-01-21)<br>* abstract; figure 1 *<br>* paragraphs [0038] - [0045] *<br>----- | 1-8 | |
| A | US 2017/307732 A1 (HAGHIGHI KASRA [SE] ET AL) 26 October 2017 (2017-10-26)<br>* abstract; figures 12-13 *<br>* paragraphs [0016], [0017], [0190] - [0201] *<br>----- | 1-8 | |

**TECHNICAL FIELDS SEARCHED (IPC)**

G01S

The present search report has been drawn up for all claims

| Place of search | Date of completion of the search | Examiner |
|---|---|---|
| Munich | 7 October 2024 | Lupo, Emanuela |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 27 5044

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2024

| Patent document cited in search report | | | Publication date | Patent family member(s) | | Publication date |
|---|---|---|---|---|---|---|
| EP 3916420 | A1 | | 01-12-2021 | CN 113740814 A | | 03-12-2021 |
| | | | | EP 3916420 A1 | | 01-12-2021 |
| | | | | US 2021373122 A1 | | 02-12-2021 |
| US 2021018591 | A1 | | 21-01-2021 | AT 520577 A1 | | 15-05-2019 |
| | | | | CN 111512177 A | | 07-08-2020 |
| | | | | EP 3692390 A1 | | 12-08-2020 |
| | | | | JP 7187550 B2 | | 12-12-2022 |
| | | | | JP 2020536251 A | | 10-12-2020 |
| | | | | KR 20200068695 A | | 15-06-2020 |
| | | | | US 2021018591 A1 | | 21-01-2021 |
| | | | | WO 2019068126 A1 | | 11-04-2019 |
| US 2017307732 | A1 | | 26-10-2017 | CN 107003398 A | | 01-08-2017 |
| | | | | DE 112016000274 T5 | | 12-10-2017 |
| | | | | EP 3365699 A1 | | 29-08-2018 |
| | | | | JP 6385581 B2 | | 05-09-2018 |
| | | | | JP 2018507385 A | | 15-03-2018 |
| | | | | KR 20170069246 A | | 20-06-2017 |
| | | | | SE 1551370 A1 | | 07-02-2017 |
| | | | | SE 1651383 A1 | | 23-04-2017 |
| | | | | SE 1750342 A1 | | 23-04-2017 |
| | | | | US 9575161 B1 | | 21-02-2017 |
| | | | | US 2017115378 A1 | | 27-04-2017 |
| | | | | US 2017307732 A1 | | 26-10-2017 |
| | | | | WO 2017069695 A1 | | 27-04-2017 |

EPO FORM P0459

For more details about this annex : see Official Journal of the European Patent Office, No. 12/82